# EUROPÄISCHE PATENTSCHRIFT

(11) **EP 2 735 531 B1**
(45) Veröffentlichungstag und Bekanntmachung des Hinweises auf die Patenterteilung: **13.04.2016**
(21) Anmeldenummer: 13005101.4
(22) Anmeldetag: 25.10.2013
(51) Int. Cl.: B65G 47/52, B07C 5/36, B65B 19/28, B65B 61/00, B65B 57/10

(54) **Verfahren und Vorrichtung zum Bewegen von Packungen, insbesondere Zigarettenpackungen**
Method and device for moving packages, in particular cigarette packages
Procédé et dispositif destinés à déplacer des paquets, notamment des paquets de cigarettes

(30) Priorität: 27.11.2012 DE 102012023105
(43) Veröffentlichungstag der Anmeldung: 28.05.2014
(73) Patentinhaber: Focke & Co. (GmbH & Co. KG), 27283 Verden (DE)
(72) Erfinder: Roesler, Burkard, 27337 Blender (DE)
(74) Vertreter: Bolte, Erich

(56) Entgegenhaltungen:
- EP-A1- 0 635 429
- WO-A1-01/62599

## Beschreibung

Die Erfindung betrifft ein Verfahren zum Auswerfen von Packungen aus einer mindestens an einer Austrittsseite offenen Tasche eines Endlosförderers mit den Merkmalen des Oberbegriffs des Anspruchs 1. Weiterhin betrifft die Erfindung eine Vorrichtung zur Durchführung des Verfahrens.

Der Auswurf von fehlerhaften Packungen aus Taschen eines Revolvers gehört zum Stand der Technik bei der Fertigung von Zigarettenpackungen (EP 0 635 429 A1). Im Bereich einer Auswurfstation werden die als fehlerhaft identifizierten Packungen mittels Druckluft, nämlich durch Düsen, über eine offene Seite aus der betreffenden Tasche des Revolvers ausgestoßen. Aufgrund der Relativstellung, nämlich des Abstands der Düsen von den Packungen, muss der Ausstoßstrahl über eine größere Distanz wirken. Dies beeinträchtigt die Leistungsfähigkeit der Auswurfeinrichtung.

Bekannt ist eine Auswurfeinheit für Filterbeutel im Zusammenhang mit einer Fertigungsmaschine für die Produktion derselben (WO 01/62599 A1). Die als fehlerhaft identifizierten Beutel werden bei einer offenen Halterung eines Revolvers im Wesentlichen mechanisch, nämlich durch einen Schieber, aus der Halterung herausbewegt. Zusätzlich, also unterstützend, wird Blasluft auf den freiliegenden Filterbeutel. Diese Auswurfeinheit ist in Aufbau und Arbeitsweise komplex.

Der Erfindung liegt die Aufgabe zugrunde, Verfahren und Vorrichtung zum Ausstoßen von Packungen aus Taschen eines Revolvers dahingehend weiterzuentwickeln, dass innerhalb kürzester Reaktions- bzw. Taktzeiten die auszustoßende Packung zuverlässig und schonend aus der Tasche auszustoßen.

Zur Lösung dieser Aufgabe wird das Verfahren gemäß Anspruch 1 vorgeschlagen.

Durch die impulsartig autretende bzw. auf die Packung wirkende Druckluft wird die Packung, auch aufgrund der geringen Masse der zu bewegenden Teile, zuverlässig aus der rohr- bzw. kanalförmigen Tasche über die Austrittsöffnung ausgeworfen. Die Druckluft wird in einem abgedichteten Bereich gegenüberliegend zur Austrittsseite - in einer Druckkammer - als Staudruck und als statischer Druck an einer freiliegenden Fläche der Packung wirksam, wobei der statische Druck für den Ausschub der Packung eine wichtige Rolle spielt. Innerhalb kurzer Zeit wird eine große Kraft wirksam. Dadurch ist es auch möglich, den Ausschub während kurzer Stillstandszeiten des Förderers, insbesondere eines taktweise drehenden Revolvers, zu bewirken.

Die Ausstoßeinheit ist an eine wirksame Druckluftquelle, insbesondere an einen benachbart angeordneten Druckluftspeicher angeschlossen, der durch Öffnen eines Absperrorgans den Druck für die Beschickung der Druckkammer freigibt. Diese ist mit einem elastisch verformbaren Organ ausgerüstet - elastisch verform- und dehnbare Membran -, die dichtend an der Aufnahme bzw. Tasche - an Taschenwandungen-anliegt, während die Druckluft über mindestens eine Luftöffnung impulsartig auf die freie (rückwärtige) Seite der Packung übertragen wird.

Die ausgeworfene Packung wird von einem Auffangrohr bzw. Auffangkanal aufgenommen, vorzugsweise nach einer freien (horizontalen) Flugbahn der Packung.

Weitere Merkmale des Verfahrens und der Vorrichtung werden nachfolgend anhand eines in den Zeichnungen dargestellten Ausführungsbeispiels der Vorrichtung näher erläutert. Es zeigt:
- Fig. 1: eine Verpackungsmaschine in schematischer Seitenansicht,

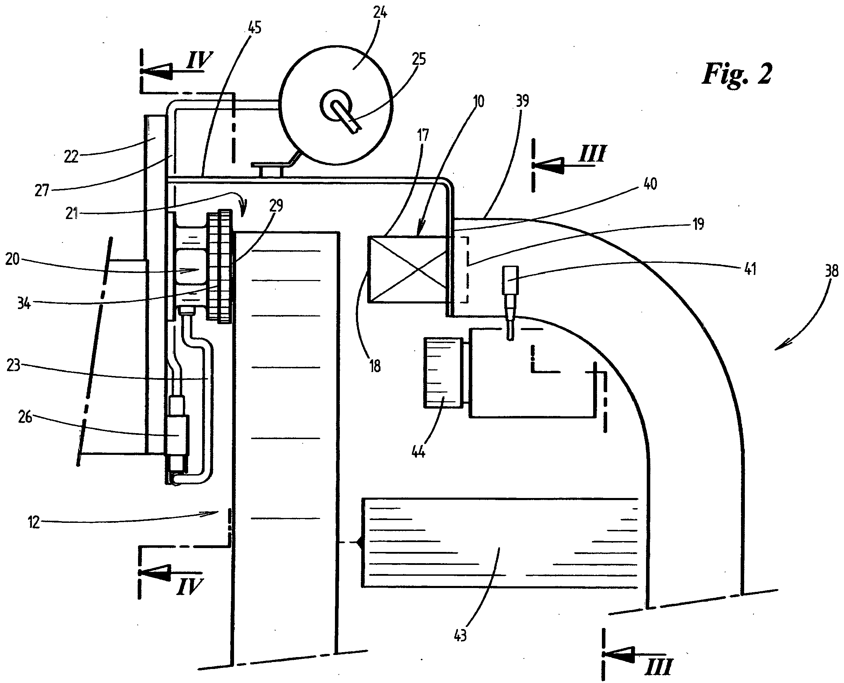

- Fig. 2: einen Ausschnitt II der Verpackungsmaschine gemäß Fig. 1 in vergrößertem Maßstab,

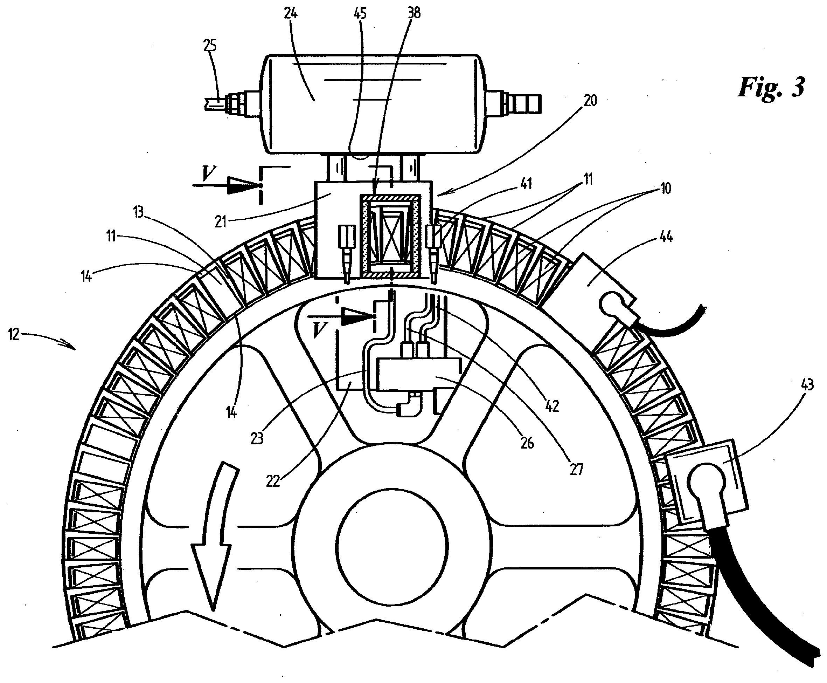

- Fig. 3: die Einzelheit gemäß Fig. 2 in Queransicht bzw. im Querschnitt III-III,

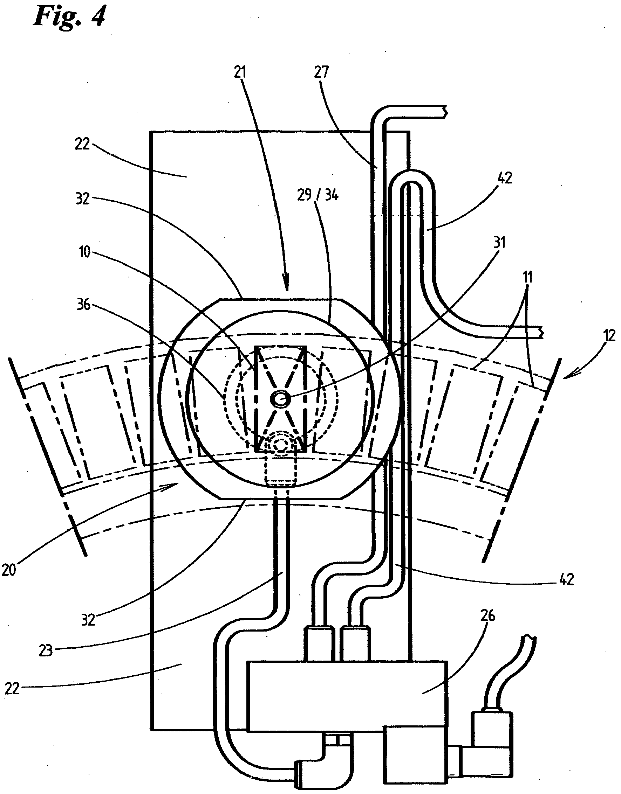

- Fig. 4: eine weitere Queransicht der Einzelheit gemäß Fig. 2 in der Querebene IV-IV, bei vergrößertem Maßstab,
- Fig. 5: einen Querschnitt der Einzelheit gemäß Fig. 3 in Schnittebene V-V bei vergrößertem Maßstab,
- Fig. 6: die Einzelheit gemäß Fig. 5 in einer veränderten Arbeitsstellung.

Die in den Zeichnungen dargestellte Technologie befasst sich mit der Handhabung von Gegenständen, insbesondere (quaderförmigen) Packungen 10. Konkret geht es bei den gezeigten Beispielen um die Fertigung von Zigarettenpackungen 10 des Typs Klappschachtel.

Thema der Innovation ist eine Verschiebung einer Packung 10 während einer kurzen Taktzeit, insbesondere der Ausschub bzw. Ausstoß aus einer kanalartigen Aufnahme, vorliegend einer Tasche 11 eines Endlosförderers, hier eines Revolvers 12. Die Aufnahme bzw. Tasche 11 ist so ausgebildet, dass im Querschnitt eine weitgehend geschlossene bzw. vollständige Umhüllung der Packung 10 gegeben ist. Die Tasche 11 ist durch Taschenwände 13, 14 begrenzt, die bei einem kreisförmigen Trockenrevolver 12 in Radialrichtung (keilförmig) und in Umfangsrichtung angeordnet sind. Die Packung 10 ist im Wesentlichen passend, also weitgehend spielfrei, innerhalb der Tasche 11 positioniert. An einander in Axialrichtung gegenüberliegenden Seiten wird eine Austrittsöffnung 15 für den Austritt der ausgestoßenen Packung 10 und gegenüberliegend eine Beaufschlagungs- bzw. Drucköffnung 16 gebildet.

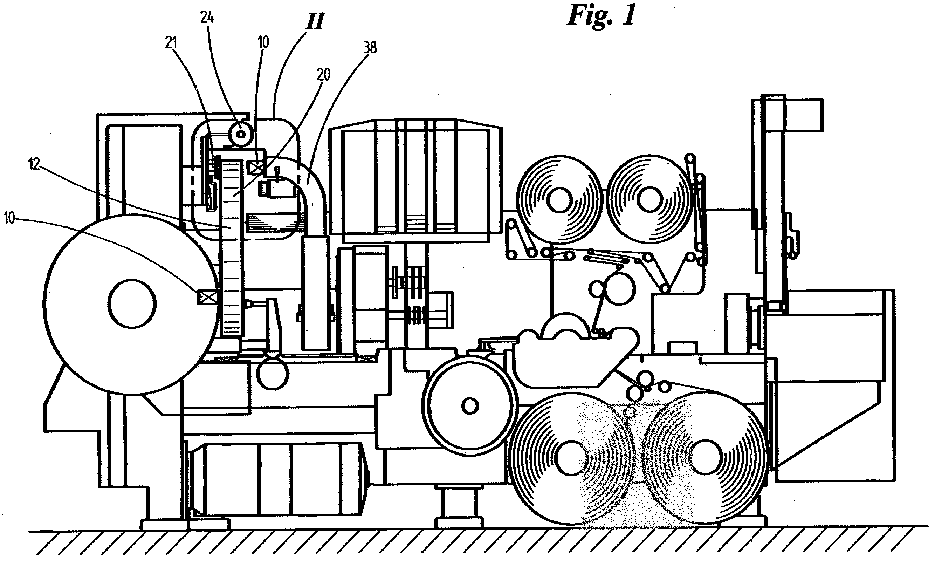

Bei dem vorliegenden, bevorzugten Anwendungsbeispiel werden Zigarettenpackungen 10 des Typs Klappschachtel durch die Verpackungsmaschine gemäß Fig. 1 hergestellt, wobei Faltlappen durch Leim miteinander verbunden sind. Vor dem Anbringen einer Außenumhüllung aus Folie werden die quaderförmigen Packungen 10 dem Revolver 12 zugeführt. Dieser ist in einer Ebene quer zur Hauptbewegungsrichtung der Verpackungsmaschine angeordnet und mit einer Vielzahl von Taschen 11 längs des Umfangs versehen. Bei getakteter Drehbewegung wird eine lange bzw. ausreichende Verweildauer der Packungen in den formgebenden Taschen 11 gewährleistet.

Die quaderförmigen Packungen sind so in den Taschen 11 des Revolvers 12 positioniert, dass schmale Längsseiten 17 radial innen und außen liegen. Quergerichtete Endflächen, beispielsweise Stirnfläche 18 und Bodenfläche 19, sind im Bereich der einander gegehüberliegenden Öffnungen 15, 16 der Tasche 11 positioniert, also freiliegend.

Der Revolver 12 bildet mindestens eine Auswurfstation 20. Diese ist zweckmäßigerweise an der obersten Position des in vertikaler Ebene drehenden Revolvers 12 gebildet. Im Bereich der Auswurfstation 20 können einzelne Packungen 10 aus der jeweiligen Tasche 11 ausgesondert und abgefördert werden, Insbesondere Packungen 10 mit identifizierten Fehlern.

Der Auswurfstation 20 ist mindestens eine Auswurfeinheit 21 zugeordnet. Diese ist feststehend bzw. ortsfest in der Auswurfstation 20 angeordnet, vorliegend an einer Tragplatte 22 eines Maschinengestells montiert. Die Auswurfeinheit 21 ist vorliegend auf eine Tasche 11 in der oberen Stellung des Revolvers 12 ausgerichtet und wird wirksam, wenn während einer kurzen Stillstandsphase die Auswurfeinheit 21 entsprechend beaufschlagt wird. Die Packung 10 wird über die Öffnung 16 mit einem Druckimpuls beaufschlagt, so dass die Packung 10 über die Austrittsöffnung 15 mit hoher Geschwindigkeit aus der Tasche 11 herausgefördert wird.

Der Auswurf der Packung 10 aus der Tasche 11 wird vorliegend mittels Druckluft bewirkt, die impulsartig auf die Packung 10 wirkt, und zwar im Bereich der Stirnseite bzw. Stirnfläche 18. Die Druckluft ist so gesteuert, dass (dynamischer) Staudruck und statischer Druck an der Packung 10 wirksam werden, wobei der statische Druck eine wichtige Komponente für den explosionsartigen Ausschub bildet.

Die Auswurfeinheit 21 ist über mindestens eine Leitung 23 an eine Druckluftquelle angeschlossen. Vorliegend ist unmittelbar im Bereich der Auswurfeinheit 21 ein Druckerzeuger, nämlich ein Druckluftspeicher 24, angeordnet. Dieser Druckbehälter wird von einer zentralen Druckluftquelle versorgt, so dass ständig ein ausreichender Druck zur Verfügung steht, zum Beispiel ein Druck von 5 bar. Der Druckluftspeicher 24 ist hier über eine Versorgungsleitung 25 mit der zentralen Druckluftversorgung der Maschine verbunden.

Der vorliegend oberhalb der Auswurfstation 20 installierte Druckluftspeicher 24 ist über die Leitung 23 mit der Auswurfeinheit 21 verbunden. Ein Absperrorgan (26), vorliegend ein Magnetventil 26, wird für einen Auswurftakt geöffnet, so dass Druckluft kurzfristig, nämlich impulsartig, der Auswurfeinheit 21 zur Verfügung gestellt wird. Das Absperrorgan 26 ist über eine Anschlussleitung 27 mit dem Druckluftspeicher 24 verbunden.

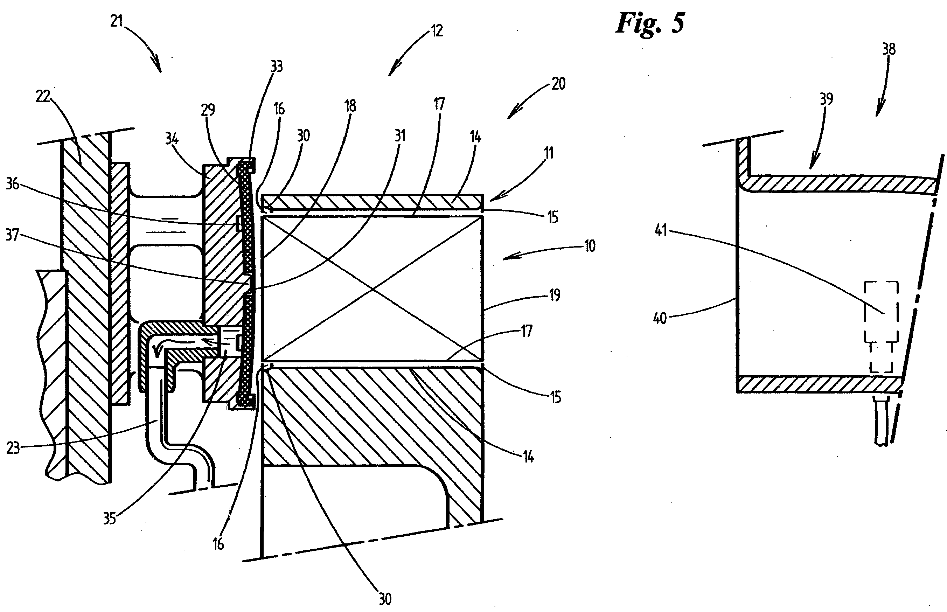

Die Auswurfeinheit 21 ist mit geringem Abstand von der Tasche 11 bzw. dem Revolver 12 positioniert, so dass der Revolver 12 an der inaktiven Auswurfeinheit 21 vorbeibewegt werden kann (Fig. 5). Zur impulsartigen Übertragung von Druckluft auf die Packung 10 wird, nach Öffnen des Absperrorgan 26, eine Druckkammer 28 der Auswurfeinheit 21 wirksam. Zugleich wird eine Abdichtung zwischen der Auswurfeinheit 21 und der betreffenden Tasche 11 hergestellt, so dass die Druckluft gezielt und verlustfrei auf die Stirnfläche 18 gerichtet werden kann. Vorliegend ist die Auswurfeinheit 21 mit einer die Druckkammer 28 auf der der Tasche 11 zugekehrten Seite begrenzenden elastischen, verformbaren und ausdehnbaren Wandung versehen, hier in der Ausführung einer elastischen Membran 29. Diese begrenzt die Druckkammer 28 auf der der Tasche 11 zugekehrten Seite.

Für den Auswurf einer Packung 10 aus einer Tasche 11 wird Druckluft, hier durch Öffnen des Absperrorgan 26, in die Druckkammer 28 eingeführt. Dadurch wird zunächst die Membran 29 verformt in Richtung auf die Tasche 11 bis zur Anlage an dieser bzw. an Rändern bzw. Kanten 30 der Tasche 11, nämlich der Taschenwände 13, 14. Innerhalb der dadurch entstehenden Druckkammer 28 wird ein hoher Druck aufgebaut. Über mindestens eine. Luftöffnung 31 wird die Druckluft impulsartig auf die Fläche 18 der Packung 10 gerichtet und diese dadurch stoßartig aus der Tasche 11 ausgeworfen. Die Luftöffnung 31 ist mittig im Bereich der Membran 29 angeordnet und - aufgrund entsprechender Relativstellung - mittig zur Tasche 11 ausgerichtet. Der Wirkungsbereich der Druckluft an der Packung 10 ist durch die Anlage der Membran 29 an der Tasche 11 abgedichtet, so dass die Druckluft über die Luftöffnung 31 verlustfrei auf die Packung 10 wirken kann.

Die flexible Wandung der Druckkammer 28, also die Membran 29, ist kreisförmig ausgebildet, vorliegend mit quergerichteten (oberen und unteren) Kanten 32. Ringsherum laufende Ränder der Membran 29 sind dauerhaft und abgedichtet fixiert mittels Randhalterung 33 eines Tragteils der Auswurfeinheit 21. Diese ist vorliegend als Tragplatte ausgebildet, bildet somit eine Kammerplatte 34. Die Membran 29 ist auf der der Tasche 11 zugekehrten Seite der Kammerplatte 34 angeordnet und längs des Randes 33 fixiert. Die Leitung 23 wird an der freien Rückseite der Kammerplatte 34 zugeführt und mündet über eine Bohrung 35 in der Druckkammer 28.

In der Ausgangsstellung liegt die Membran 29 - gegenüber der Tasche 11 zurückgezogen - an der zugekehrten Seite der Kammerplatte 34 an, und zwar hier abstandslos. Um bei Einleitung eines Auswurftaktes eine kurzfristige Verteilung der Druckluft in der Druckkammer 28 zu bewirken, ist ein Verteilersystem für die Druckluft gebildet, vorliegend in der Ausführung eines Ringkanals 36 in der Kammerplatte 34. Die Leitung 23 mündet im Bereich des Ringkanals 36, so dass die Druckluft unmittelbar im gesamten Bereich der Kammerplatte 34 wirksam werden kann.

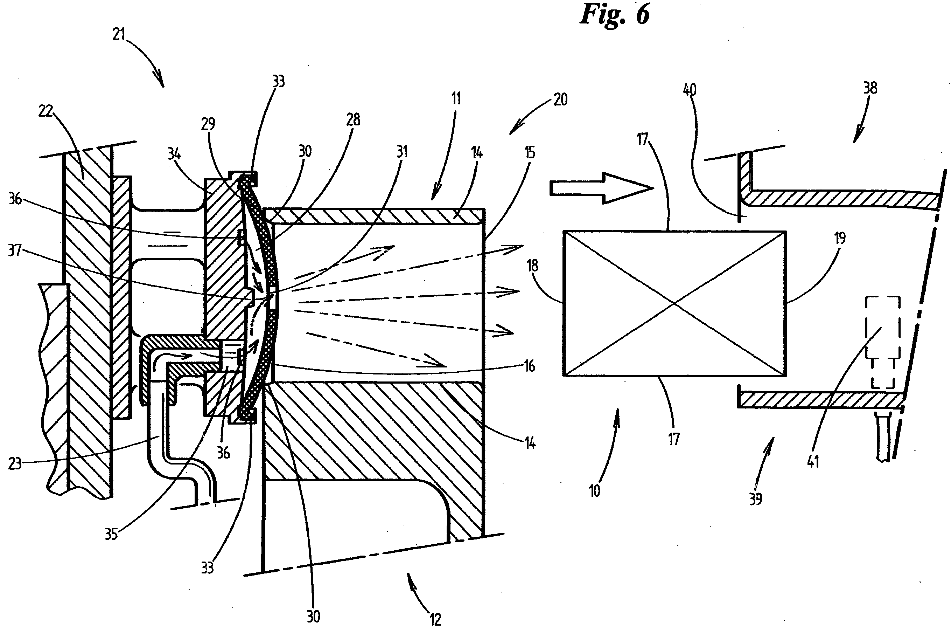

Die Luftöffnung 31 in der Membran 29 ist in der inaktiven Stellung (Fig. 5) verschlossen. Vorliegend ist an der Kammerplatte 34 ein Vorsprung 37 im Bereich der Luftöffnung 31 angeordnet. Der Vorsprung 37 sitzt passend in der Luftöffnung 31 und verschließt diese, wenn die Membran 29 an der (leicht gewölbten) Kammerplatte 34 anliegt. Bei Zuführung von Druckluft wird die Membran 29 von der Kammerplatte 34 abgehoben (Fig. 6). Dabei wird in einem wirksamen Augenblick die Luftöffnung 31 von dem Vorsprung 37 freigegeben, so dass der Druckimpuls auf die Packung 10 übertragen werden kann.

Durch geeignete Maßnahmen wird sichergestellt, dass die Auswurfeinheit 21 nach einem Arbeitstakt in die Ausgangsstellung zurückkehrt. Vorliegend wird die Membran 29 bis zur vollflächigen Anlage an der Kammerplatte 34 zurückverformt. Dieser Vorgang wird durch entsprechende Gegenkräfte unterstützt, und zwar durch Erzeugung von Unterdruck in der Druckkammer 28, die die Rückführung der Membran 29 - unter Verschluss der Luftöffnung 31 - in einem kurzen Takt ermöglicht. Der Unterdruck in der Druckkammer 28 wird über eine Unterdruckleitung 42 - vorzugsweise an eine zentrale Unterdruckquelle angeschlossen - mit Hilfe des gemeinsamen Absperrorgans - Magnetventil 26 - erzeugt. Der Unterdruck wird - nach Beendigung des Druckimpulses - durch Umschaltung des Magnetventils 26 und Verbinden der Unterdruckleitung 42 mit der Leitung 23 erzeugt (Fig. 5). Die Leitung 23 wirkt demnach - je nach Stellung des Magnetventils 26 - als Druckleitung oder als Saugleitung.

Für die schnelle, verzögerungsfreie Funktionsweise ist von Bedeutung, dass der Druckluftspeicher 24 unmittelbar im Bereich der Auswurfstation 20 angeordnet ist - oberhalb der Auswurfeinheit 21 -, und zwar auf einem Träger, der vorzugsweise mit der Tragplatte 22 verbunden ist. Die kurzen Luftleitungen zur Auswurfeinheit 21 und die benachbarte Anordnung des Magnetventils 26 gewährleisten kurze Schaltzeiten.

Die ausgeworfenen Packungen 10 können in einem Behälter aufgefangen werden. Vorteilhaft ist ein in der Auswurfstation 20 - auf der zur Auswurfeinheit 21 gegenüberliegenden Seite des Revolvers 12 - angeordneter Auffangkanal 38. Dieser ist vorzugsweise als im Querschnitt geschlossenes Rohr ausgebildet mit einem horizontalen Schenkel 39 und einer Auffangöffnung 40 gegenüberliegend zur Tasche 11. Der Auffangkanal 38 und die Auffangöffnung 40 sind so bemessen, dass die ausgeworfene Packung 10 störungsfrei von dem Auffangkanal 38 aufgenommen werden kann (Fig. 6). Die ausgeworfene Packung 10 wird nach unten umgelenkt und in einem Behälter für anderweitige Bearbeitung aufgefangen.

Der Auffangkanal 38 ist so angeordnet, dass die Auffangöffnung 40 in einem (horizontalen) Abstand von der Austrittsöffnung 15 der Tasche 11 angeordnet ist. Der Abstand ist vorzugsweise (etwas) größer als die Längsabmessung der Packung 10, so dass die ausgeworfene Packung 10 eine Strecke im freien Flug zurücklegt bis zur Aufnahme durch den Auffangkanal 38. Die korrekte Aufnahme einer ausgeworfenen Packung 10 im Bereich des Auffangkanals 38 wird durch geeignete Organe überwacht, vorliegend durch einander gegenüberliegende Sensoren 41 im Bereich des Schenkels 39.

Der Auffangkanal 38 ist im Querschnitt viereckig, insbesondere rechteckig ausgebildet, wobei mindestens aufrechte Kanalwände lichtdurchlässig sind, so dass die Sensoren 41 außerhalb des Auffangkanals 38 positioniert sind und eine Überwachungsschranke durch die seitlichen Kanalwände hindurch erzeugen. Bei Fehlstellungen von Packungen 10 innerhalb des Auffangkanals 38 wird ein Fehlersignal erzeugt. Der Auffangkanal 38 ist über ein winkelförmiges Tragstück 45 mit der gemeinsamen Tragplatte 22 verbunden. Der Druckluftspeicher 24 kann auf diesem stegartigen Tragstück 45 montiert sein.

Die Auswurfeinheit 21 kann so eingesetzt werden, dass die aufeinanderfolgend transportierten Packungen 10 nacheinander ausgestoßen werden. Bei dem vorliegenden Beispiel werden gesteuert ausgewählte Packungen 10 ausgesondert, nämlich Fehlpackungen. Die Packungen 10 werden beispielsweise während des Transports durch den Revolver 12 im Bereich einer freiliegenden Packungsfläche - Bodenfläche 19 - mit einer Markierung bzw. Bedruckung versehen. Zu diesem Zweck ist im Bereich einer Markierungsstation ein Drucker 43 ortsfest positioniert. Insbesondere während der kurzen Stillstandsphase wird auf der Packungsfläche 19 eine Bedruckung angebracht.

In Trarisportrichtung nachfolgend wird die Korrektheit der Bedruckung überprüft, und zwar durch entsprechende Sensoren. Vorliegend ist eine Kamera 44 im Bewegungsbereich der Packungen 10 positioniert. Durch dieses Überwachungsorgan werden die Bedruckungen überprüft. Bei fehlerhafter Bedruckung wird aufgrund eines Signals die identifizierte Packung 10 im Bereich der Auswurfstation 20 ausgesondert.

Der Ausstoß von Fehlerpackungen aus Taschen eines Revolvers 12 ist ein bevorzugtes Anwendungsbeispiel. Grundsätzlich kann die vorliegende Technik bei taktweisem, impulsartigem aber auch bei kontinuierlichem Transport von geschlossenen Gegenständen, insbesondere Packungen, eingesetzt werden.

**Bezugszeichenliste:**

| | | | |
|---|---|---|---|
| 10 | Packung | 36 | Ringkanal |
| 11 | Tasche | 37 | Vorsprung |
| 12 | Revolver | 38 | Auffangkanal |
| 13 | Taschenwand | 39 | Schenkel |
| 14 | Taschenwand | 40 | Auffangöffnung |
| 15 | Austrittsöffnung | 41 | Sensor |
| 16 | Drucköffnung | 42 | Unterdruckleitung |
| 17 | Längsseite | 43 | Drucker |
| 18 | Stirnfläche | 44 | Kamera |
| 19 | Bodenfläche | 45 | Tragstück |
| 20 | Auswurfstation | | |
| 21 | Auswurfeinheit | | |
| 22 | Tragplatte | | |
| 23 | Leitung | | |
| 24 | Druckluftspeicher | | |
| 25 | Versorgungsleitung | | |
| 26 | Magnetventil | | |
| 27 | Anschlussleitung | | |
| 28 | Druckkammer | | |
| 29 | Membran | | |
| 30 | Kante | | |
| 31 | Luftöffnung | | |
| 32 | Kante | | |
| 33 | Randhalterung | | |
| 34 | Kammerplatte | | |
| 35 | Bohrung | | |

## Patentansprüche

1. Verfahren zum Auswerfen von Packungen (10) aus einer Austrittsöffnung (15) einer Tasche (11) eines Endlosförderers, insbesondere eines Revolvers (12), wobei auf der zur Austrittsöffnung (15) gegenüberliegenden Seite der Tasche (11) Druckluft von einer Auswurfeinheit (21) auf die freie Seite der Packung (10) übertragen und die Packung (10) über die Austrittsöffnung (15) ausgeworfen wird, **gekennzeichnet durch** folgende Merkmale:
a) der Auswurfeinheit (21) wird gesteuert Druckluft zugeführt, nämlich in eine Druckkammer (28) der Auswurfeinheit (21) geleitet,
b) **durch** die Druckluft wird eine bewegbare Wandung (29) der Auswurfeinheit aus einer vom Revolver (12) beabstandeten Ausgangsstellung mindestens teilweise in eine Arbeitsstellung bewegt, und zwar unter dichtender Anlage an der Tasche (11),
c) die bewegbare Wandung (29) der Druckkammer (28) weist in einem der Tasche (11) bzw. der Packung (10) in der Tasche (11) zugekehrten Bereich, eine Luftöffnung (31) auf, **durch** die Druckluft aus der Druckkammer (28) impulsartig auf die Packung (10) gerichtet wird.

2. Verfahren nach Anspruch 1, **dadurch gekennzeichnet, dass** die bewegbare Wandung (29) ein elastisch verformbares Teil ist, insbesondere eine verformbare und/oder dehnbare Membran.

3. Verfahren nach Anspruch 1 oder 2, **dadurch gekennzeichnet, dass** die Druckluft während einer Stillstandsphase der Tasche (11) bzw. des Revolvers (12) wirksam wird und über die Luftöffnung (31) in dem bewegbaren Teil der Auswurfeinheit (21), insbesondere in der bewegbare Wandung (29), im Bereich der beaufschlagten Fläche der Packung (10) mittig zur Stirnfläche (18) derselben positioniert ist.

4. Verfahren nach Anspruch 1 oder einem der weiteren Ansprüche, **dadurch gekennzeichnet, dass** Packungen (10) durch den Revolver (12) taktweise transportiert und während jeweiligen Stillstands der Packungen (10) zuerst im Bereich einer Bodenfläche (19) an der Austrittsöffnung (15) einer Tasche (11) mit einer Markierung bzw. Bedruckung versehen, sodann diese durch eine kamera (44) überprüft und danach bei Feststellung eines Fehlers die betreffende Packung (10) im Bereich der nachfolgenden Auswurfstation (20) ausgestoßen wird.

5. Vorrichtung mit einem Endlosförderer, insbesondere Revolver (12), mit rohr- bzw. kanalartigen Taschen (11) für quaderförmige Packungen (10), wobei die getaktet transportierten Packungen (10) bzw. Taschen (11) einer Auswurfstation (20) zuführbar sind mit einer Auswurfeinheit (21) für den Auswurf von ausgewählten Packungen (10) mittels Druckluft über eine Austrittsöffnung (15) der Tasche (11), **gekennzeichnet durch** folgende Merkmale:
a) die Auswurfeinheit (21) weist eine Druckkammer (28) mit einer bewegbaren Wandung (29) mit Luftöffnung (31) auf, insbesondere in einer Ausführung der bewegbaren Wandung (29) als elastisch verformbare und/oder dehnbare Membran,
b) eine zur Druckkammer (28) führende Leitung (23) dient zur Einführung von Druckluft in die Druckkammer (28),
c) in der Leitung (23) ist ein Absperrorgan (26) angeordnet zur gesteuerten Zufuhr der Druckluft zur Druckkammer (28),
d) die bewegbare Wandung (29) ist unter dichtender Anlage an der Tasche (11) des Revolvers (12) in eine Arbeitsstellung bewegbar.

6. Vorrichtung nach Anspruch 5, **gekennzeichnet durch** folgende Merkmale:
a) die bewegbare Wandung (29) der Druckkammer (28), insbesondere die elastisch verformbare und/oder dehnbare Membran (29), ist **durch** die Druckluft bis zur dichten Anlage an der Packung (10) bzw. an der Tasche (11) bewegbar,
b) die Luftöffnung (31) der bewegbaren Wandung (29) ist auf eine zu beaufschlagende Packungsfläche gerichtet, insbesondere auf eine Stirnfläche (18),
c) die bewegbare Wandung (29) der Druckkammer (28) ist vorzugsweise bei Beendigung eines Auswurftaktes aufgrund einer Rückführungsbewegung in eine Ausgangsstellung bewegbar, vorzugsweise unter Anlage an einer Kammerplatte (34) der Druckkammer (28), wobei vorzugsweise die Rückführungsbewegung **durch** Saugwirkung mittels Unterdruck in der Leitung (23) herstellbar ist.

7. Vorrichtung nach Anspruch 5 oder einem der weiteren Ansprüche, **dadurch gekennzeichnet, dass** die Luftöffnung (31) in der bewegbaren Wandung (29) der Druckkammer (28) durch ein Verschlussorgan verschließbar ist, insbesondere durch einen Vorsprung (37) in der Druckkammer (28) für den Eintritt in die Luftöffnung (31) der bewegbaren Wandung (29) bei druckloser Druckkammer (28).

8. Vorrichtung nach Anspruch 6 oder einem der weiteren Ansprüche, **dadurch gekennzeichnet, dass** die insbesondere kreisförmige bewegbare Wandung (29) abgedichtet mit ihrem Rand an einem Träger der Auswurfeinheit (21), insbesondere an einer Kammerplatte (34) mit Bohrung (35) für die Leitung (23) befestigt ist, wobei die Kammerplatte (34) auf der der Druckkammer (28) zugekehrten Seite ein Kanalsystem für die Druckluft aufweist, mindestens mit einem Ringkanal (36).

9. Vorrichtung nach Anspruch 5 oder einem der weiteren Ansprüche, **gekennzeichnet durch** folgende Merkmale:
a) an der Austrittsöffnung (15) der Tasche (11) ist ein Auffangkanal (38) zur Aufnahme einer ausgeworfenen Packung (10) angeordnet mit einer der Tasche (11) zugekehrten Auffangöffnung (40),
b) der Auffangkanal (38) weist einen horizontal gerichteten Schenkel (39) auf mit der der Auswurfstation (20) zugekehrten Ausgangsöffnung (40),
c) der Auffangkanal (38) bzw. dessen Auffangöffnung (40) ist - in Bewegungsrichtung der Packung (10) - mit Abstand von der Tasche (11) angeordnet, insbesondere mit einem Abstand, der (geringfügig) größer ist als die Abmessung der Packung (10) in Bewegungsrichtung.

10. Vorrichtung nach Anspruch 9 oder einem der weiteren Ansprüche, **gekennzeichnet durch** Überwachungssensoren für eine Korrektstellung von Packungen (10) im Bereich des Auffangkanals (38), vorzugsweise mit eine quergerichtete Schranke erzeugenden Sensoren (41) zu beiden Seiten des vorzugsweise im Querschnitt rechteckigen Auffangkanals (38) - im Bereich des Schenkels (39).

## Claims

1. Method of ejecting packs (10) from an exit opening (15) of a pocket (11) of an endless conveyor, in particular of a turret (12), wherein, on that side of the pocket (11) which is located opposite the exit opening (15), compressed air is transmitted from an ejecting unit (21) onto the free side of the pack (10) and the pack (10) is ejected via the exit opening (15), **characterized by** the following features:
a) the ejecting unit (21) is fed compressed air in a controlled manner, that is to say compressed air is directed into a pressure chamber (28) of the ejecting unit (21),
b) the compressed air moves a movable wall (29) of the ejecting unit from a starting position, in which said wall is spaced apart from the turret (12), at least in part into an operating position, to be precise with sealing abutment against the pocket (11),
c) in a region which is directed towards the pocket (11) or the pack (10) in the pocket (11), the movable wall (29) of the pressure chamber (28) has an air opening (31), through which compressed air is directed in a pulsed manner from the pressure chamber (28) onto the pack (10).

2. Method according to Claim 1, **characterized in that** the movable wall (29) is an elastically deformable part, in particular a deformable and/or expansible membrane.

3. Method according to Claim 1 or 2, **characterized in that** the compressed air takes effect during a standstill phase of the pocket (11) or turret (12) and is positioned, via the air opening (31) in the movable part of the ejecting unit (21), in particular in the movable wall (29), in the region of the compressed-air-activated surface of the pack (10), centrally in relation to the end surface (18) of the latter.

4. Method according to Claims 1 or one of the further claims, **characterized in that** packs (10) are transported cyclically through the turret (12) and, during a respective standstill of the packs (10), first of all provided, in the region of a base surface (19) at the exit opening (15) of a pocket (11), with a marking or imprint, then the latter is checked by a camera (44), and thereafter, if a defect is established, the relevant pack (10) is expelled in the region of the following ejecting station (20).

5. Apparatus having an endless conveyor, in particular a turret (12), with tubular or channel-like pockets (11) for cuboidal packs (10), wherein the cyclically transported packs (10) or pockets (11) can be fed to an ejecting station (20) with an ejecting unit (21) for ejecting selected packs (10) by means of compressed air via an exit opening (15) of the pocket (11), **characterized by** the following features:
a) the ejecting unit (21) has a pressure chamber (28) with a movable wall (29) with an air opening (31), in particular with the movable wall (29) being configured in the form of an elastically deformable and/or expansible membrane,
b) a line (23) leading to the pressure chamber (28) serves for introducing compressed air into the pressure chamber (28),
c) the line (23) contains a shut-off mechanism (26) in order for the compressed air to be fed in a controlled manner to the pressure chamber (28),
d) the movable wall (29) can be moved into an operating position with sealing abutment against the pocket (11) of the turret (12).

6. Apparatus according to Claim 5, **characterized by** the following features:
a) the movable wall (29) of the pressure chamber (28), in particular the elastically deformable and/or expansible membrane (29), can be moved by the compressed air until it is in sealing abutment against the pack (10) or against the pocket (11),
b) the air opening (31) of the movable wall (29) is directed onto a pack surface which is to be activated by compressed air, in particular onto an end surface (18),
c) preferably upon completion of an ejecting cycle, the movable wall (29) of the pressure chamber (28) can be moved, on account of a return movement, into a starting position, preferably with abutment against a plate (34) of the pressure chamber (28), wherein preferably the return movement can be brought about by suction action by means of negative pressure in the line (23).

7. Apparatus according to Claim 5 or one of the further claims, **characterized in that** the air opening (31) in the movable wall (29) of the pressure chamber (28) can be closed by a closure mechanism, in particular by a protrusion (37) in the pressure chamber (28) for entry into the air opening (31) of the movable wall (29) when the pressure chamber (28) is in a pressureless state.

8. Apparatus according to Claim 6 or one of the further claims, **characterized in that** the in particular circular movable wall (29) is fastened in a sealed manner, by way of its periphery, on a carrier of the ejecting unit (21), in particular on a chamber plate (34) with a bore (35) for the line (23), wherein, on the side which is directed towards the pressure chamber (28), the chamber plate (34) has a channel system for the compressed air, at least with an annular channel (36).

9. Apparatus according to Claim 5 or one of the further claims, **characterized by** the following features:
a) the exit opening (15) of the pocket (11) has arranged on it a collecting channel (38) for accommodating an ejected pack (10), the collecting channel having a collecting opening (40) directed towards the pocket (11),
b) the collecting channel (38) has a horizontally directed limb (39) with the exit opening (40), which is directed towards the ejecting station (20),
c) the collecting channel (38) or the collecting opening (40) thereof - as seen in the movement direction of the pack (10) - is arranged at a distance from the pocket (11), in particular at a distance which is (slightly) larger than the dimensioning of the pack (10) in the movement direction.

10. Apparatus according to Claim 9 or one of the further claims, **characterized by** monitoring sensors for correct positioning of packs (10) in the region of the collecting channel (38), preferably with sensors (41), which generate a transversely directed barrier, on either side of the preferably cross-sectionally rectangular collecting channel (38) - in the region of the limb (39).

## Revendications

1. Procédé pour éjecter des paquets (10) hors d'une ouverture de sortie (15) d'une poche (11) d'un transporteur sans fin, en particulier d'un carrousel (12), dans lequel on transmet sur le côté de la poche (11) opposé à l'ouverture de sortie (15) de l'air comprimé provenant d'une unité d'éjection (21) sur le côté libre du paquet (10) et on éjecte le paquet (10) via l'ouverture de sortie (15), **caractérisé par** les caractéristiques suivantes:
a) on envoie de l'air comprimé de façon commandée à l'unité d'éjection (21), on le conduit notamment dans une chambre sous pression (28) de l'unité d'éjection (21),
b) on déplace à l'aide de l'air comprimé une paroi mobile (29) de l'unité d'éjection depuis une position initiale espacée du carrousel (12) au moins partiellement dans une position de travail, notamment avec un appui étanche sur la poche (11),
c) la paroi mobile (29) de la chambre sous pression (28) présente, dans une région tournée vers la poche (11) ou vers le paquet (10) dans la poche (11), une ouverture d'air (31), par laquelle on dirige l'air comprimé provenant de la chambre sous pression (28) de façon pulsée vers le paquet (10).

2. Procédé selon la revendication 1, **caractérisé en ce que** la paroi mobile (29) est une pièce déformable élastiquement, en particulier une membrane déformable et/ou extensible.

3. Procédé selon la revendication 1 ou 2, **caractérisé en ce que** l'air comprimé est actif pendant une phase d'arrêt de la poche (11) ou du carrousel (12) et est positionné par l'ouverture d'air (31) dans la pièce mobile de l'unité d'éjection (21), en particulier dans la paroi mobile (29), dans la région de la face frappée du paquet (10) au centre de sa face frontale (18).

4. Procédé selon la revendication 1 ou l'une quelconque des autres revendications, **caractérisé en ce que** l'on transporte des paquets (10) en cadence au moyen du carrousel (12) et on les munit, pendant l'arrêt respectif des paquets (10) d'abord dans la région d'une face de fond (19) à l'ouverture de sortie (15) d'une poche (11), d'un marquage ou d'une impression, puis on contrôle celui-ci/celle-ci à l'aide d'une caméra (44) et ensuite, en cas de constatation d'un défaut, on éjecte le paquet concerné (10) dans la région de la station d'éjection qui suit (20).

5. Dispositif avec un transporteur sans fin, en particulier un carrousel (12), avec des poches (11) en forme de tube ou de canal pour des paquets de forme parallélépipédique (10), dans lequel les paquets (10) transportés en cadence ou les poches (11) peuvent être envoyés à une station d'éjection (20) munie d'une unité d'éjection (21) pour l'éjection de paquets sélectionnés (10) au moyen d'air comprimé par une ouverture de sortie (15) de la poche (11), **caractérisé par** les caractéristiques suivantes:
a) l'unité d'éjection (21) présente une chambre sous pression (28) avec une paroi mobile (29) présentant une ouverture d'air (31), en particulier dans un mode de réalisation de la paroi mobile (29) sous forme de membrane élastiquement déformable et/ou extensible,
b) une conduite (23) menant à la chambre sous pression (28) est destinée à l'introduction d'air comprimé dans la chambre sous pression (28),
c) un organe d'arrêt (26) est disposé dans la conduite (23) pour la fourniture contrôlée d'air comprimé dans la chambre sous pression (28),
d) la paroi mobile (29) peut être déplacée dans une position de travail en appui étanche sur la poche (11) du carrousel (12).

6. Dispositif selon la revendication 5, **caractérisé par** les caractéristiques suivantes:
a) la paroi mobile (29) de la chambre sous pression (28), en particulier la membrane élastiquement déformable et/ou extensible (29), est déplaçable au moyen de l'air comprimé jusqu'à l'appui étanche sur le paquet (10) ou sur la poche (11),
b) l'ouverture d'air (31) de la paroi mobile (29) est dirigée vers une face du paquet à frapper, en particulier vers une face frontale (18),
c) la paroi mobile (29) de la chambre sous pression (28) est déplaçable, à la fin d'un cycle d'éjection, dans une position initiale en raison d'un mouvement de retour, de préférence en appui sur une plaque de chambre (34) de la chambre sous pression (28), dans lequel le mouvement de retour peut de préférence être opéré par une action d'aspiration au moyen d'une dépression dans la conduite (23).

7. Dispositif selon la revendication 5 ou l'une quelconque des autres revendications, **caractérisé en ce que** l'ouverture d'air (31) dans la paroi mobile (29) de la chambre sous pression (28) peut être fermée par un organe de fermeture, en particulier par une saillie (37) dans la chambre sous pression (28) à entrer dans l'ouverture d'air (31) de la paroi mobile (29) lorsque la chambre sous pression (28) est sans pression.

8. Dispositif selon la revendication 6 ou l'une quelconque des autres revendications, **caractérisé en ce que** la paroi mobile (29) de forme notamment circulaire est fixée de façon étanche avec son bord sur un support de l'unité d'éjection (21), en particulier sur une plaque de chambre (34) avec un alésage (35) pour la conduite (23), dans lequel la plaque de chambre (34) présente, sur le côté tourné vers la chambre sous pression (28), un système de canal pour l'air comprimé, au moins avec un canal annulaire (36).

9. Dispositif selon la revendication 5 ou l'une quelconque des autres revendications, **caractérisé par** les caractéristiques suivantes:
a) un canal de collecte (38) est disposé à l'ouverture de sortie (15) de la poche (11), pour la réception d'un paquet éjecté (10), avec une ouverture de collecte (40) tournée vers la poche (11),
b) le canal de collecte (38) présente une branche orientée horizontalement (39) avec l'ouverture de sortie (40) tournée vers la station d'éjection (20),
c) le canal de collecte (38) ou son ouverture de collecte (40) est - dans la direction du mouvement du paquet (10) - disposé à distance de la poche (11), en particulier à une distance qui est (légèrement) plus grande que la dimension du paquet (10) dans la direction du mouvement.

10. Dispositif selon la revendication 9 ou l'une quelconque des autres revendications, **caractérisé par** de capteurs de surveillance pour une position correcte de paquets (10) dans la région du canal de collecte (38), de préférence avec des capteurs (41) produisant une barrière orientée transversalement, sur les deux côtés du canal de collecte (38) de section transversale de préférence rectangulaire - dans la région de la branche (39).
